# EUROPÄISCHE PATENTANMELDUNG

(11) **EP 4 390 587 A1**
(43) Veröffentlichungstag der Anmeldung: **26.06.2024**
(21) Anmeldenummer: 22216059.0
(22) Anmeldetag: 22.12.2022
(51) Int. Cl.: G05B 19/418, G06N 3/08

(54) **BETRIEBSVERFAHREN FÜR EINE WERKZEUGMASCHINE MIT SELBSTTÄTIGER FÄHIGKEITEN-ERKENNUNG, COMPUTERPROGRAMMPRODUKT, ÜBERGEORDNETE STEUEREINHEIT, WERKZEUGMASCHINE, FERTIGUNGSSYSTEM UND SIMULATIONSPROGRAMMPRODUKT**

(71) Anmelder: Siemens Aktiengesellschaft, 80333 München (DE)
(72) Erfinder: Diezel, Matthias, 90482 Nürnberg (DE); Obst, Birgit, 80935 München (DE); Wehrstedt, Jan Christoph, 81829 München (DE); Wieczorek, Michael, 91056 Erlangen (DE)
(74) Vertreter: Siemens Patent Attorneys

(57) **Zusammenfassung**

Die Erfindung betrifft ein Betriebsverfahren (100) für eine Werkzeugmaschine (10), das einen ersten Schritt (110) umfasst, in dem ein Bereitstellen der Werkzeugmaschine (10) in einem aktiven Betriebszustand und ein Erfassen von zumindest einem Prozessparameter (15) der Werkzeugmaschine (10) und/oder des Werkstücks (14) erfolgt. In einem zweiten Schritt (120) wird ein Erfassen einer vorliegenden Konfiguration (17) der Werkzeugmaschine (10) durchgeführt. Es folgt ein dritter Schritt (130), im dem die erfasste vorliegende Konfiguration (17) der zumindest eine Prozessparameter (15) an eine Künstliche Intelligenz (30) übermittelt werden. In einem vierten Schritt (140) erfolgt ein Ermitteln zumindest eines Fähigkeits-Parameters (33) anhand der Künstlichen Intelligenz (40). Der zumindest eine Fähigkeits-Parameter (33) wird einer übergeordneten Steuereinheit (40) bereitgestellt, die mit der lokalen Steuereinheit (20) über eine kommunikative Datenverbindung (36) verbunden ist. Die Erfindung betrifft ebenso eine entsprechendes Computerprogrammprodukt (50) zur Durchführung des Betriebsverfahrens (100), eine entsprechend eingerichtete übergeordnete Steuereinheit (40), eine korrespondierende Werkzeugmaschine (10), ein Fertigungssystem (70) und ein Simulationsprogrammprodukt (60).

## Beschreibung

Die Erfindung betrifft ein Betriebsverfahren für eine Werkzeugmaschine, bei dem eine selbsttätige Erkennung von Fähigkeiten der Werkzeugmaschine durchgeführt wird. Die Erfindung betrifft ebenso ein Computerprogrammprodukt, mit dem ein solches Betriebsverfahren umgesetzt wird. Weiter betrifft die Erfindung eine entsprechende übergeordnete Steuereinheit, eine Werkzeugmaschine und ein Fertigungssystem. Ferner betrifft die Erfindung ein Simulationsprogrammprodukt, mit dem ein solches Fertigungssystem optimierbar ist.

Aus der Anmeldung JP 2019-190941 A ist ein Verfahren zum Überprüfen einer Zuverlässigkeit einer Werkstückvermessung durch die Messvorrichtungen an einer Werkzeugmaschine selbst bekannt. Darin wird ein Werkstück mit bekannten Abmessungen durch die Werkzeugmaschine selbst wiederholt vermessen. Durch Abgleichen mit den zuvor bestimmten bekannten Abmessungen des Werkstücks wird bestimmt, inwieweit die mit der Werkzeugmaschine erzielte Messgenauigkeit den jeweiligen Anforderungen entspricht.

Werkzeugmaschinen weisen eine zunehmende Komplexität auf und werden häufig für unterschiedliche Anwendungsfälle angepasst oder optimiert. Dadurch tritt eine Individualisierung der jeweiligen Werkzeugmaschinen ein, so dass Herstellerangaben über deren Fähigkeitsspektrum nicht mehr zutreffen können. Weiter wird durch Software-Updates und/oder den Einsatz von Machine-learning-basierten Steuerungen das Fähigkeitsspektrum existierende Werkzeugmaschinen selbsttätig erweitert. Infolgedessen werden Fertigungssysteme, beispielsweise Fertigungsstraßen, heterogener. Es besteht Bedarf daran, trotz zunehmender Heterogenität von Werkzeugmaschinen deren Leistungsfähigkeit stärker auszuschöpfen. Der Erfindung liegt die Aufgabe zugrunde, eine Möglichkeit bereitzustellen, das technische Potential von Werkzeugmaschinen mit steigender Heterogenität einfach und kosteneffizient zu erschließen.

Die Aufgabenstellung wird durch ein erfindungsgemäßes Betriebsverfahren für eine Werkzeugmaschine gelöst, die zu einer Bearbeitung eines Werkstücks ausgebildet ist. Die Werkzeugmaschine kann hierbei zu einer spanenden Bearbeitung des Werkstücks oder zu einer Handhabung des Werkstücks ausgebildet sein. Die Werkzeugmaschine kann unter anderem als Mehrachs-Fräsmaschine oder als Roboter ausgebildet sein. Die Werkzeugmaschine weist eine Mehrzahl von Sensoren auf, die dazu ausgebildet sind, zumindest einen Prozessparameter zu erfassen. Der Prozessparameter stellt eine Größe dar, die sich bei der Bearbeitung des Werkstücks einstellt und währenddessen erfassbar ist. Der Prozessparameter kann eine in der Werkzeugmaschine selbst vorliegende Größe sein oder eine am Werkstück vorliegende Größe. Des Weiteren ist die Werkzeugmaschine mit einer lokalen Steuereinheit ausgestattet, die dazu ausgebildet sein kann, Befehle auszugeben, durch die die Bearbeitung des Werkstücks veranlasst wird. Das Betriebsverfahren umfasst einen ersten Schritt, in dem die Werkzeugmaschine in einem aktiven Betriebszustand bereitgestellt wird. Im aktiven Betriebszustand erfolgt eine Bearbeitung des Werkstücks. Die Bearbeitung des Werkstücks kann selbsttätig ablaufen, beispielsweise durch eine Teileprogramm, oder manuell von einem Benutzer geführt sein. Ebenso wird im ersten Schritt zumindest ein Prozessparameter der Werkzeugmaschine und/oder des Werkstücks erfasst. Der Prozessparameter wird mittels zumindest einem der Sensoren der Werkzeugmaschine erfasst.

Weiter weist das Betriebsverfahren einen zweiten Schritt auf, in dem eine vorliegende Konfiguration der Werkzeugmaschine erfasst wird. Die vorliegende Konfiguration der Werkzeugmaschine kann über zumindest einen der Sensoren, einen Datensatz in der lokalen Steuereinheit, einer übergeordneten Steuereinheit und/oder eine Benutzereingabe ermittelt werden. Ebenso gehört ein dritter Schritt zum Betriebsverfahren, in dem die im zweiten Schritt ermittelte vorliegende Konfiguration der Werkzeugmaschine an eine Künstliche Intelligenz übertragen wird. Gleichermaßen wird im dritten Schritt der im ersten Schritt ermittelte zumindest eine Prozessparameter an die Künstliche Intelligenz übertragen. Die Künstliche Intelligenz ist dazu ausgebildet, die Konfiguration und den zumindest einen Prozessparameter zu empfangen und zu verarbeiten.

Darüber hinaus umfasst das erfindungsgemäße Betriebsverfahren einen vierten Schritt, in dem zumindest ein Fähigkeits-Parameter der Werkzeugmaschine anhand der Künstlichen Intelligenz ermittelt wird. Der Fähigkeits-Parameter umfasst zumindest eine Angabe über eine von der Werkzeugmaschine durchführbare Bearbeitungsoperation, wodurch diese kategorisiert oder typisiert ist. Beispielsweise kann durch den Fähigkeits-Parameter die im ersten Schritt durchgeführte Bearbeitung kategorisiert oder typisiert sein. Das Ermitteln des zumindest einen Fähigkeits-Parameters kann durch die Künstliche Intelligenz basierend auf der im dritten Schritt übertragenen Konfiguration und dem zumindest einen Prozessparameter erfolgen. Diese können insbesondere als Eingaben für die Künstliche Intelligenz eingesetzt werden. Durch die Künstliche Intelligenz wird beispielsweise ermittelt, welche Art Arbeitsphasen, also Tätigkeiten, die Werkzeugmaschine verrichtet und welche Fähigkeiten daraus ableitbar sind. Beispielsweise ist aus der Tatsache, dass ein Roboterarm mit einer Schweißvorrichtung versehen ist und zwischen zwei kurzen Betätigungen der Schweißvorrichtung schnelle Verfahrbewegungen durchführt, ableitbar, dass dieser für Punktschweißen geeignet bzw. eingerichtet ist. Der Fähigkeits-Parameter kann mit einer Grammatik einer Programmierung der lokalen Steuereinheit und/oder der übergeordneten Steuereinheit verträglich, also kompatibel, ausgebildet sein. Der ermittelte Fähigkeits-Parameter wird im vierten Schritt mit der vorliegenden Konfiguration der Werkzeugmaschine verknüpft. Der Fähigkeits-Parameter kann mit der verknüpften vorliegenden Konfiguration der Werkzeugmaschine in der lokalen Steuereinheit und/oder der übergeordneten Steuereinheit zumindest zwischengespeichert werden.

Erfindungsgemäß wird zumindest der Fähigkeits-Parameter der übergeordneten Steuereinheit bereitgestellt. Dazu wird der Fähigkeits-Parameter in abrufbarer Form auf der lokalen Steuereinheit und/oder einem weiteren Speicher zumindest vorübergehend vorgehalten. Die lokale Steuereinheit und die übergeordnete Steuereinheit sind über eine Datenverbindung, insbesondere eine kommunikative Datenverbindung, miteinander verbunden. Die kommunikative Datenverbindung kann beispielsweise eine Netzwerkverbindung, insbesondere eine Internetverbindung, oder eine Drahtlosverbindung, beispielsweise eine Mobilfunkverbindung, sein. Alternativ kann die Datenverbindung durch den Austausch von Datenträgern erfolgen. Das erfindungsgemäße Betriebsverfahren kann selbsttätig betriebsbegleitend zu einem bestimmungsgemäßen Betrieb der Werkzeugmaschine durchgeführt werden. Dementsprechend sind bisher unbekannte Verwendungen der Werkzeugmaschine schnell über das Betriebsverfahren erkennbar und als korrespondierender Fähigkeits-Parameter der übergeordneten Steuereinheit übermittelbar. Das erfindungsgemäße Betriebsverfahren ist unabhängig von Zugang zu Betriebsgrenzen und vergleichbaren Angaben in der lokalen Steuereinheit. Das erfindungsgemäße Betriebsverfahren ist dadurch auf eine Vielzahl an Werkzeugmaschinen übertragbar, beispielsweise von fremden Herstellern. Dadurch sind unterschiedliche Werkzeugmaschinen in puncto Fähigkeitsspektrum selbsttätig erfassbar und in einheitlicher Weise vergleichbar. Dementsprechend ist deren technische Leistungsfähigkeit vereinfacht erschließbar.

In einer Ausführungsform des beanspruchten Betriebsverfahrens kann der Prozessparameter als Koordinate einer Werkzeugposition und/oder als Werkzeugausrichtung der Werkzeugmaschine ausgebildet sein. Durch die Koordinate der Werkzeugposition kann ein erreichbarer Arbeitsraum charakterisiert sein. Eine Werkzeugausrichtung, beispielsweise eines Fräsers, kann bestimmen, welche Form ein herzustellendes Werkstück aufweisen darf. Alternativ oder ergänzend kann der Prozessparameter auch einen Sollwert für ein Antriebsdrehmoment oder eine Antriebsdrehzahl sein. Hierdurch kann beispielsweise eine erzielbare Fräsgeschwindigkeit in der vorliegenden Konfiguration charakterisiert sein. Weiter alternativ oder ergänzend kann der zumindest eine Prozessparameter als Messdaten des Werkstücks ausgebildet sein. Die Messdaten können eine erfasste Oberflächenrauigkeit und/oder Oberflächenwelligkeit umfassen. Hieraus ist ableitbar, welche Oberflächengüte mit der Werkzeugmaschine in der entsprechend vorliegenden Konfiguration herstellbar ist. Der zumindest eine Prozessparameter kann weiter alternativ oder ergänzend manuelle Steuerungsdaten umfassen, die von einem Benutzer manuell vorgegeben sind. Manuelle Steuerungsdaten können unter anderem auf eine Modifikation der Werkzeugmaschine zurückzuführen sein, durch die das Fähigkeitsspektrum der Werkzeugmaschine über den Werkszustand hinaus erweitert ist. Ebenso kann der zumindest eine Prozessparameter als eine Leistungsaufnahme der Werkzeugmaschine, insbesondere eine elektrische Leistungsaufnahme, ein Drehmoment am Werkzeug, eine Temperatur des Werkstücks oder des Werkzeugs, ein Vibrationsmesswert, und/oder ein vorliegender Verschleißzustand sein. Ferner kann der zumindest eine Prozessparameter auch eine Kombination von mehreren der oben skizzierten Größen umfassen. Als Prozessparameter kann für das beanspruchte Betriebsverfahren jegliche messbare Größe an der Werkzeugmaschine und/oder dem Werkstück dienen, aus der eine Aussage über die durchgeführte Arbeitsphase der Werkzeugmaschine erlaubt. Das beanspruchte Betriebsverfahren ist dazu geeignet, eine Vielzahl an Angaben zu berücksichtigen, so dass wiederum eine präzise Ermittlung des zumindest einen Fähigkeits-Parameters ermöglicht. Weiter ist das beanspruchte Betriebsverfahren auf eine Vielzahl an Werkzeugmaschinen anwendbar.

Darüber hinaus kann die vorliegende Konfiguration der Werkzeugmaschine durch Konfigurationsdaten ausgedrückt sein, die im zweiten Schritt erfasst werden. Die Konfigurationsdaten können eine Typenangabe über das Werkzeug umfassen. Das Werkzeug kann fest mit der Werkzeugmaschine verbunden sein, also nicht austauschbar. Alternativ kann das Werkzeug austauschbar sein, beispielsweise unterschiedliche Fräser. In einer Vielzahl an Steuerungsprogrammen für Werkzeugmaschinen ist eine Angabe über das zu verwendende Werkzeug hinterlegt und kann in einfacher Weise abgefragt werden. Alternativ oder ergänzend können die Konfigurationsdaten eine Versionsangabe über ein Steuerungsprogramm auf der lokalen Steuereinheit umfassen. Weiter alternativ oder ergänzend können die Konfigurationsdaten eine Code-Analyse-Angabe zum Steuerungsprogramm auf der lokalen Steuereinheit umfassen. Dementsprechend sind Fähigkeiten der Werkzeugmaschine, die durch Software-Updates erworben sind, als Konfigurationsdaten im beanspruchten Betriebsverfahren berücksichtigbar. Des Weiteren können die Konfigurationsdaten Kennwerte der Werkzeugmaschine, insbesondere des im ersten Schritt eingesetzten Werkzeugs, umfassen oder zumindest mit solchen verknüpft sein. Das beanspruchte Betriebsverfahren ist dazu geeignet, eine breite Spanne an Angaben zu nutzen, die die Konfiguration der Werkzeugmaschine charakterisieren. Dies wiederum erlaubt eine präzise Erkennung der Fähigkeiten der Werkzeugmaschine.

In einer weiteren Ausführungsform des beanspruchten Betriebsverfahrens ist die Künstliche Intelligenz als ein sogenannter Machine-Learning-Algorithmus, insbesondere als Neuronales Netz, ausgebildet. Derartige Künstliche Intelligenzen sind vielseitig und selbsttätig weiterentwicklungsfähig. Des Weiteren sind derartige Künstliche Intelligenzen mit relativ geringem Aufwand und vorherigem Training einsetzbar. Das vorherige Training kann beispielsweise anhand von Fähigkeits-Parametern erfolgen, die aus Kennwerten der Werkzeugmaschine abgeleitet sind. Die Kennwerte können aus Datenblättern der Werkzeugmaschine entnommen sein. Infolge ihrer Fähigkeit zur selbsttätigen Weiterentwicklung liefern derartige Künstliche Intelligenzen nach relativ kurzer Einsatzdauer technisch aussagekräftige Fähigkeits-Parameter. Dadurch ist das beanspruchte Betriebsverfahren schnell und kosteneffizient implementierbar.

Ferner kann der Fähigkeits-Parameter einen erreichbaren Arbeitsraum, einen Energieverbrauch, eine Verschleißrate, eine Angabe über einen Arbeitsphasen-Typ, eine Häufigkeitsangabe über eine Mehrzahl an Arbeitsphasen-Typen, eine Beschaffenheitsangabe des Werkstücks und/oder eine Kombination hieraus umfassen. Durch den erreichbaren Arbeitsraum kann beispielsweise eine maximal zulässige Abmessung eines Werkstücks charakterisiert sein. Weiter kann der Energieverbrauch spezifisch für einen Werkstück-Typ angegeben werden. Beispielsweise kann angegeben werden, welche Menge an elektrischer Energie nötig ist, um aus einem bestimmten unbearbeiteten Werkstück ein angestrebtes bearbeitetes Werkstück herzustellen. Durch die Verschleißrate kann charakterisiert sein, wie viele Betriebsstunden unterbrechungsfrei durchführbar sind. Die Angabe des Arbeitsphasen-Typs spiegelt, welche Tätigkeiten die Werkzeugmaschine durchführt. Die Häufigkeitsangabe über eine Mehrzahl an Arbeitsphasen-Typen kann angeben, für welche Tätigkeit die Werkzeugmaschine von einem Benutzer für besonders geeignet angesehen wird. Ferner kann durch die Beschaffenheitsangabe des Werkstücks, insbesondere die erreichbare Oberflächengüte, also Oberflächenrauigkeit oder Oberflächenwelligkeit, charakterisiert sein, für welche Arbeitsaufträge die Werkzeugmaschine geeignet oder ungeeignet ist. Derartige Fähigkeitsangaben sind in maschinell auswertbarer Form speicherbar. Die Werkzeugmaschine ist durch die lokale Steuereinheit oder die übergeordnete Steuereinheit so in einfacher Weise darauf hin überprüfbar, ob diese für einen anstehenden Maschinenauftrag geeignet ist. Mittels der Künstlichen Intelligenz ist eine breite Spanne an Fähigkeits-Parameter ermittelbar, die in besonders einfacher Weise weiter auswertbar sind.

Im beanspruchten Betriebsverfahren kann die Künstliche Intelligenz auf der lokalen Steuereinheit oder der übergeordneten Steuereinheit ablaufen. Bei Ausführen der Künstlichen Intelligenz auf der lokalen Steuereinheit ist Datenverkehr zwischen dieser und der übergeordneten Steuereinheit reduzierbar. Ferner ist der Aufwand für eine Datenaufbereitung minimiert. Bei Ausführen der Künstlichen Intelligenz auf der übergeordneten Steuereinheit wiederum ist deren erhöhte Rechenleistung nutzbar. Dadurch ist die Künstliche Intelligenz schnell weiterentwickelbar, insbesondere durch Training mit im Betrieb gewonnenen Daten.

Alternativ kann die Künstliche Intelligenz teilweise auf der lokalen Steuereinheit und teilweise auf der übergeordneten Steuereinheit ausgeführt werden. Die Künstliche Intelligenz ist dadurch als Mehrzahl an Teilprogrammen ausgebildet, die auf der lokalen Steuereinheit und der übergeordneten Steuereinheit separat ablaufen. Durch die Datenverbindung, insbesondere die kommunikative Datenverbindung, zwischen der übergeordneten Steuereinheit und der lokalen Steuereinheit erfolgt während des beanspruchten Betriebsverfahrens ein Austausch zwischen den Teilprogrammen. Dadurch wird die Funktionalität des beanspruchten Betriebsverfahrens verwirklicht. Einzelne Schritte des Betriebsverfahrens können dadurch bedarfsgerecht auf mehrere Hardwareplattformen aufgeteilt werden. Beispielsweise kann auf der lokalen Steuereinheit eine Weiterverarbeitung der erfassten Konfiguration und des zumindest einen Prozessparameters erfolgen, bei der diese Daten komprimiert werden. Dadurch ist der Datenverkehr mit der übergeordneten Steuereinheit minimierbar. Eine rechenintensive Weiterverarbeitung der komprimierten Daten kann anschließend durch die übergeordnete Steuereinheit erfolgen. Hierdurch ist das beanspruchte Betriebsverfahren besonders schnell durchführbar.

Des Weiteren kann das beanspruchte Betriebsverfahren einen fünften Schritt umfassen, in dem ein Maschinenauftrag durch die lokale Steuereinheit und/oder übergeordnete Steuereinheit empfangen wird. Durch den Maschinenauftrag ist zumindest ein durch die Werkzeugmaschine durchzuführender Arbeitsgang vorgegeben. Der Maschinenauftrag wird dahingehend ausgewertet, dass zumindest eine Fähigkeits-Anforderung ermittelt wird. Das Ermitteln der Fähigkeits-Anforderung kann beispielsweise mittels der Künstlichen Intelligenz erfolgen. Beispielsweise kann ermittelt werden, ob der Maschinenauftrag ein bestimmtes Werkzeug erfordert. Das Betriebsverfahren umfasst weiter einen sechsten Schritt, in dem der Maschinenauftrag von der Werkzeugmaschine umgesetzt wird, wenn für die im fünften Schritt ermittelte Fähigkeits-Anforderung ein korrespondierender Fähigkeits-Parameter der Werkzeugmaschine ermittelt wird. Das Ermitteln des entsprechenden Fähigkeits-Parameters kann beispielsweise durch die Künstliche Intelligenz erfolgen. Der Fähigkeits-Parameter kann im sechsten Schritt durch ein Verarbeiten von zumindest einem Prozessparameter und der vorliegenden Konfiguration ermittelt werden, oder durch Abgleich mit bereits ermittelten abgespeicherten Fähigkeits-Parametern. Ein korrespondierender Fähigkeits-Parameter kann auch für eine Konfiguration der Werkzeugmaschine erkannt werden, die von ihrer vorliegenden Konfiguration abweicht. Dementsprechend kann alternativ im sechsten Schritt die Konfiguration der Werkzeugmaschine ausgegebenen werden, bei der der für den Maschinenauftrag nötige Fähigkeits-Parameter vorliegt. Die entsprechende Konfiguration kann an einen Benutzer und/oder eine Schnittstelle ausgegeben werden, die zur lokalen oder übergeordneten Steuereinheit gehören kann. Dadurch ist eine Werkzeugmaschine selbsttätig und schnell identifizierbar, die mit relativ geringem Aufwand dazu einrichtbar ist, den Maschinenauftrag umzusetzen. Je mehr Werkzeugmaschinen beispielsweise zu einem Fertigungssystem gehören, umso effizienter ist dieses durch das beanspruchte Betriebsverfahren nutzbar. Ergänzend können weitergehende Kennwerte bei der Auswahl der Werkzeugmaschine bzw. der zugehörigen Konfiguration weitere Kennwerte miteinbezogen werden.

In einer weiteren Ausführungsform des beanspruchten Betriebsverfahrens können der erste und zweite Schritt, also das Erfassen des zumindest einen Prozessparameters und der vorliegenden Konfiguration der Werkzeugmaschine, jeweils in einer Mehrzahl an Fertigungsdurchgängen betriebsbegleitend durchgeführt werden. In den Fertigungsdurchgängen wird jeweils ein Werkstück bearbeitet. Das beanspruchte Betriebsverfahren erzeugt dadurch während des Betriebs der Werkzeugmaschine Daten, die der Künstlichen Intelligenz beispielsweise als Trainingsdaten zuführbar sind. Die so erzeugten Daten, die den zumindest einen Prozessparameter und die vorliegende Konfiguration umfassen, können auf der lokalen Steuereinheit gespeichert werden und zu einem vorgebbaren Zeitpunkt an die übergeordnete Steuereinheit übertragen werden. Alternativ können die so erzeugten Daten betriebsbegleitend, also im Wesentlichen mitlaufend, an die übergeordnete Steuereinheit übertragen werden. Ein vorliegender Betrieb der Werkzeugmaschine ist infolgedessen nutzbar, um entsprechende Daten zu sammeln und bereitzustellen. Ein separater Einlern-Betrieb oder Weiterlern-Betrieb sind beim beanspruchten Betriebsverfahren entbehrlich. Die entsprechende Werkzeugmaschine ist somit effizient um das beanspruchte Betriebsverfahren ergänzbar. Das beanspruchte Betriebsverfahren ist insgesamt in einfacher Weise im Zuge einer Nachrüstung der Werkzeugmaschine implementierbar.

Darüber hinaus kann die Künstliche Intelligenz, die im beanspruchten Betriebsverfahren eingesetzt wird, anhand des im ersten Schritt ermittelten mindestens einen Prozessparameters und der im zweiten Schritt ermittelten Konfiguration der Werkzeugmaschine weitertrainiert werden. Die entsprechenden Daten, die den zumindest einen Prozessparameter und die zugehörige Konfiguration der Werkzeugmaschine aus dem ersten bzw. zweiten Schritt umfassen, können als Trainingsdaten bereitgestellt werden. Beispielsweise kann ein Duplikat der im vierten Schritt eingesetzten Künstlichen Intelligenz anhand der Trainingsdaten weitergebildet werden. Anschließend kann die im vierten Schritt verwendete Künstliche Intelligenz durch das weitergebildete Duplikat ersetzt werden. Die kann beispielsweise in einem Betriebszustand der Werkzeugmaschine erfolgen, in dem ein Maschinenauftrag durchgeführt wird, der bereits in der Vergangenheit zumindest einmal bestimmungsgemäß abgeschlossen worden ist. In einem derartigen Betriebszustand ist nicht mit Betriebsabläufen zu rechnen, aus denen die Künstliche Intelligenz weitergehende Fähigkeiten der Werkzeugmaschine identifizieren könnte. Eine vorübergehende Funktionsuntüchtigkeit der Künstlichen Intelligenz, die durch ihre Weiterbildung, also ihr Weitertrainieren, hervorgerufen wird, stellt keine Beeinträchtigung des Betriebs der Werkzeugmaschine dar. Die eingesetzte Künstliche Intelligenz kann während einer Fertigungsunterbrechung durch das weitergebildete Duplikat ersetzt werden. Insgesamt ist das beanspruchte Betriebsverfahren selbsttätig weiterbildbar und erlaubt hohe Laufzeiten der zugehörigen Werkzeugmaschine.

Die zugrundeliegende Aufgabe wird ebenso durch ein erfindungsgemäßes Computerprogrammprodukt gelöst, das zu einem Ermitteln eines Fähigkeits-Parameters einer Werkzeugmaschine ausgebildet ist. Das Computerprogrammprodukt ist dazu ausgebildet, zumindest einen Prozessparameter der Werkzeugmaschine zu empfangen und zu verarbeiten. Ebenso ist da Computerprogrammprodukt dazu eingerichtet, eine vorliegende Konfiguration der Werkzeugmaschine zu empfangen und zu verarbeiten. Das Computerprogrammprodukt umfasst weiter eine Künstliche Intelligenz, durch die der zumindest eine Prozessparameter und die vorliegende Konfiguration verarbeitbar sind. Erfindungsgemäß ist das Computerprogrammprodukt dazu ausgebildet, zumindest eine Ausführungsform des oben skizzierten Betriebsverfahrens durchzuführen. Das erfindungsgemäße Computerprogrammprodukt erlaubt es, in einfacher Weise das beanspruchte Betriebsverfahren umzusetzen. Das Computerprogrammprodukt kann monolithisch ausgebildet sein, also in seiner vollständigen Funktionalität auf einer Hardwareplattform ausführbar sein. Alternativ kann das Computerprogrammprodukt modular ausgebildet sein und eine Mehrzahl von Teilprogrammen umfassen. Die Teilprogramme sind auf separaten Hardwareplattformen ausführbar, die über eine kommunikative Datenverbindung miteinander verbunden sind. Die Teilprogramme wirken im bestimmungsgemäßen Betrieb zusammen und setzen dabei eines der oben dargestellten Betriebsverfahren um. Beispielsweise kann das Computerprogrammprodukt je ein Teilprogramm umfassen, das auf der lokalen Steuereinheit bzw. auf der übergeordneten Steuereinheit ausgeführt wird. Ferner kann das Computerprogrammprodukt zumindest teilweise als Software und/oder festverdrahtet ausgebildet sein. Beispielsweise kann das Computerprogrammprodukt zumindest teilweise als Chip, integrierte Schaltung, ASIC oder FPGA ausgebildet sein. Durch das erfindungsgemäße Computerprogrammprodukt ist das beanspruchte Betriebsverfahren sachgerecht auf einer breiten Spanne an Werkzeugmaschinen implementierbar.

Ebenso wird die oben beschriebene Aufgabenstellung durch eine erfindungsgemäße übergeordnete Steuereinheit gelöst, die über eine Datenverbindung, insbesondere eine kommunikative Datenverbindung, mit einer Mehrzahl an Werkzeugmaschinen koppelbar ist. Die Werkzeugmaschinen sind jeweils mit einer lokalen Steuereinheit versehen, die dazu geeignet sind, mittelbar oder unmittelbar über die Datenverbindung, insbesondere die kommunikative Datenverbindung, mit der übergeordneten Steuereinheit zu kommunizieren. Die erfindungsgemäße übergeordnete Steuereinheit ist dazu ausgebildet, ein Betriebsverfahren nach einer der oben dargestellten Ausführungsformen zumindest teilweise durchzuführen. Dazu kann die übergeordnete Steuereinheit beispielsweise mit einem oben beschriebenen Computerprogrammprodukt ausgestattet sein. Die übergeordnete Steuereinheit kann beispielsweise als sogenanntes Edge-Gerät, als Leitrechner, als Operator Station, als Speicherprogrammierbare Steuerung, kurz SPS oder in Englisch auch PLC genannt, als Server, als Computer-Cluster oder als Computer-Cloud ausgebildet sein. Insbesondere kann die übergeordnete Steuereinheit dazu ausgebildet sein, die Künstliche Intelligenz, die im beanspruchten Betriebsverfahren eingesetzt wird, ablaufen zu lassen und/oder weiter zu trainieren.

Gleichermaßen wird die eingangs skizzierte Aufgabenstellung durch eine erfindungsgemäße Werkzeugmaschine gelöst. Die Werkzeugmaschine ist mit einer lokalen Steuereinheit und einem Werkzeug ausgestattet. Das Werkzeug ist zu einem Bearbeiten eines Werkstücks ausgebildet. Weiter weist die Werkzeugmaschine eine Mehrzahl an Sensoren auf, mit denen zumindest ein Prozessparameter erfassbar ist, der beim Bearbeiten des Werkstücks vorliegt. Erfindungsgemäß ist die lokale Steuereinheit dazu ausgebildet, zumindest eine Ausführungsform des oben dargelegten Betriebsverfahrens zumindest teilweise durchzuführen. Dazu kann die lokale Steuereinheit beispielsweise mit einem Computerprogrammprodukt gemäß einer der oben beschriebenen Ausführungsformen ausgestattet sein.

Darüber hinaus wird die oben dargelegte Aufgabe durch ein erfindungsgemäßes Fertigungssystem gelöst. Das Fertigungssystem umfasst eine Mehrzahl an Werkzeugmaschinen, die mit einer übergeordneten Steuereinheit mittelbar oder unmittelbar verbunden sind. Das Fertigungssystem ist erfindungsgemäß dazu ausgebildet, für eine Mehrzahl seiner Werkzeugmaschinen zumindest eine Ausführungsform des oben dargestellten Betriebsverfahrens umzusetzen. Hierzu können die übergeordnete Steuereinheit und/oder zumindest eine der damit verbundenen Werkzeugmaschinen nach einer der oben skizzierten Ausführungsformen ausgebildet sein.

Ferner wird die eingangs beschriebene Aufgabenstellung durch ein erfindungsgemäßes Simulationsprogrammprodukt gelöst, das zu einem Optimieren eines Fertigungsvorgangs ausgebildet ist, der auf einem Fertigungssystem durchzuführen ist. Hierzu kann das Simulationsprogrammprodukt Befehle umfassen, die bei einem Ausführen einen Computer, auf dem das Simulationsprogrammprodukt ausgeführt wird, dazu veranlassen, den Fertigungsvorgang in vorgebbarer Weise nachzustellen. Der Fertigungsvorgang umfasst das Bearbeiten von zumindest einem Werkstück mittels zumindest einer Werkzeugmaschine, die zum Fertigungssystem gehört. Das Simulationsprogrammprodukt umfasst einen Digitalen Zwilling des Fertigungssystems. Der Digitale Zwilling kann beispielsweise als digitaler Zwilling im Sinne von US 2017/268572 A1 ausgebildet sein. Der Offenbarungsgehalt von US 2017/268572 A1 wird durch Verweisung in die vorliegende Anmeldung miteinbezogen. Der Digitale Zwilling kann dazu ausgebildet sein, einen Steuerbefehlssatz auszugeben, mit dem das Fertigungssystem betreibbar ist. Mittels des erfindungsgemäßen Computerprogrammprodukts kann basierend auf den Fähigkeits-Parametern, die zu den zugehörigen Werkzeugmaschinen ermittelt sind, der Fertigungsvorgang simuliert werden. Weiter ist die Simulation des Fertigungsvorgangs anhand der Fähigkeits-Parameter variierbar und so der Fertigungsvorgang bezogen auf eine vorgebbare Größe, beispielsweise Zeitbedarf, Energieverbrauch und/oder Werkzeugverschleiß, optimierbar. Die Erfindung beruht unter anderem auf der überraschenden Erkenntnis, dass die gemäß dem oben skizzierten Betriebsverfahren ermittelten Fähigkeits-Parameter ein beschleunigtes Optimieren eines Fertigungsvorgangs per Simulation erlauben. Dadurch sind Rüstzeiten und Einlaufzeiten reduzierbar, wenn das zugrundeliegende Fertigungssystem modifiziert wird, beispielsweise um ein anderes Produkt herzustellen.

Ebenso wird die zugrundeliegende Aufgabe durch eine erfindungsgemäße Verwendung einer Künstlichen Intelligenz gelöst. Die Künstliche Intelligenz ist dazu ausgebildet, zumindest einen vorliegenden Prozessparameter und eine vorliegende Konfiguration einer Werkzeugmaschine zu empfangen und zu verarbeiten. Erfindungsgemäß wird die Künstliche Intelligenz dazu eingesetzt, einen Fähigkeits-Parameter der Werkzeugmaschine zu ermitteln. Dazu kann die Künstliche Intelligenz dazu ausgebildet sein, ein Betriebsverfahren nach zumindest einer der oben skizzierten Ausführungsformen zumindest teilweise umzusetzen. Die oben dargelegten Merkmale des beanspruchten Betriebsverfahrens sind folglich analog auf die erfindungsgemä-ße Verwendung übertragbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die Merkmale in den Figuren gezeigten Ausführungsformen mit den oben skizzierten Merkmalen kombinierbar. Es zeigen im Einzelnen:
- FIG 1: eine erste Ausführungsform des beanspruchten Betriebsverfahrens;
- FIG 2: eine zweite Ausführungsform des beanspruchten Betriebsverfahrens.

Eine erste Ausführungsform des beanspruchten Betriebsverfahrens 100, das in einem Fertigungssystem 70 mit einer Werkzeugmaschine 10 durchgeführt wird. Die Werkzeugmaschine 10 ist mit einem austauschbaren Werkzeug 16 ausgestattet und ist dazu ausgebildet, ein Werkstück 14 zu bearbeiten. Das Werkzeug 16 ist als Fräser ausgebildet und über einen Werkzeugantrieb 11 antreibbar. Die Werkzeugmaschine 10 umfasst ebenso einen Verfahrantrieb 13, über den das Werkzeug 16 beweglich ist. Des Weiteren ist die Werkzeugmaschine 10 mit einer Mehrzahl an Sensoren 12 versehen, mit denen jeweils der Werkzeugantrieb 11 oder der Verfahrantrieb 13 überwachbar ist. Einer der Sensoren 12 ist als Kamera 19 ausgebildet und dazu geeignet, Bilddaten an einer Oberfläche des Werkstücks 14 zu erfassen. Anhand der Sensoren 12 ist einzeln oder in einer Kombination von mehreren Sensoren 12 ein Prozessparameter 15 erfassbar, der vorliegt, wenn das Werkstück 14 durch die Werkzeugmaschine 10 bearbeitet wird. Zu den erfassbaren Prozessparametern 15 kann beispielsweise eine Koordinate einer Werkzeugposition 22, ein Sollwert für ein Antriebsdrehmoment 23, Bilddaten 24 von der Oberfläche des Werkstücks 14 oder eine Messwert 25, wie unter anderem eine Leistungsaufnahme des Werkzeugs 16 bzw. des zugehörigen Werkzeugantriebs 11, gehören. Ferner ist die Werkzeugmaschine 10 mit einer lokalen Steuereinheit 20 versehen, die der Werkzeugmaschine 10 unmittelbar zugeordnet ist und die dazu ausgebildet ist, ein Steuerungsprogramm 45 auszuführen, durch das eine Bearbeitung des Werkstücks 14 vorgebbar ist. Die lokale Steuereinheit 20 ist über eine kommunikative Datenverbindung 36 mit einer übergeordneten Steuereinheit 40 verbunden, die wiederum mit weiteren Werkzeugmaschinen 10.1, 10.2, 10.3 über kommunikative Datenverbindungen 36 gekoppelt ist. Der zumindest eine erfasste Prozessparameter 15 wird im ersten Schritt 110 als Daten 21 bereitgestellt, die an die lokale Steuereinheit 20 übertragbar sind.

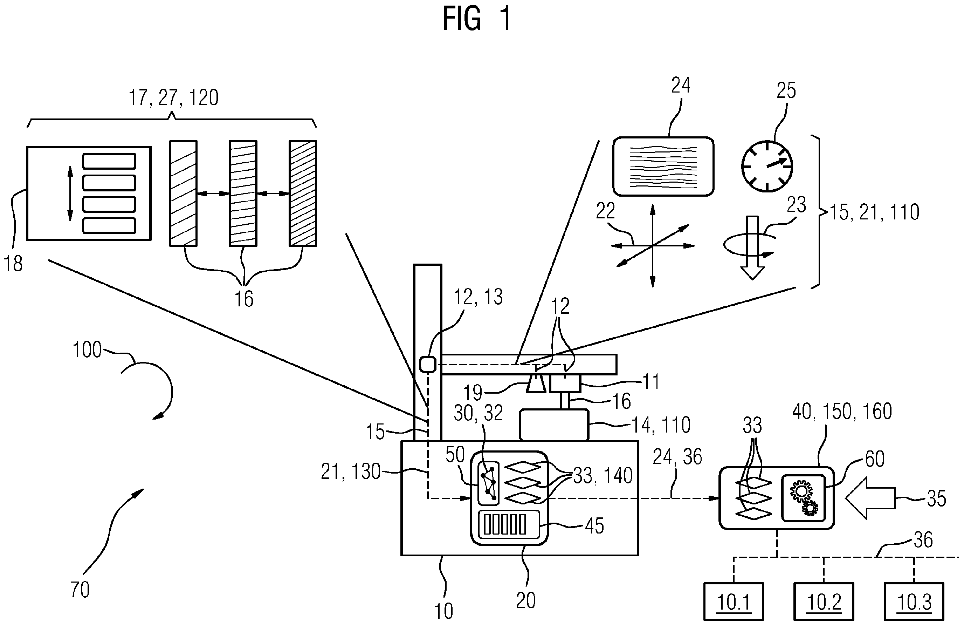

Das Betriebsverfahren 100 umfasst einen ersten Schritt 110, in dem die Werkzeugmaschine 10 in einem aktiven Betriebszustand bereitgestellt wird, in dem das Werkstück 14 bearbeitet wird. Während des ersten Schritts 110 wird ein Prozessparameter 15 erfasst, der beim Bearbeiten des Werkstücks 14 vorliegt. Dazu wird zumindest einer der Sensoren 12 eingesetzt. Ferner umfasst das Betriebsverfahren 100 einen zweiten Schritt 120, in dem eine vorliegende Konfiguration 17 der Werkzeugmaschine 10 erfasst wird. Die Konfiguration 17 der Werkzeugmaschine 10 kann beispielsweise eine Typenangabe über das eingesetzte austauschbare Werkzeug 16 umfassen. Dies in FIG 1 durch unterschiedliche Fräsertypen als Werkzeuge 16 versinnbildlicht. Ferner kann die Konfiguration 17 auch Werkzeugmaschinenparameter 18 umfassen, die für die im ersten Schritt 110 durchgeführte Bearbeitung des Werkstücks 14 vorgegeben sind. Ebenso können die Werkzeugmaschinenparameter 18 auch eine Versionsangabe über das im ersten Schritt 110 angewandte Steuerungsprogramm 45 und/oder eine Code-Analyse-Angabe zum Steuerungsprogramm 45 umfassen, das im ersten Schritt 110 angewandt wird. Die im zweiten Schritt 120 erfasste Konfiguration 17 wird in Form von Konfigurationsdaten 27 gespeichert und für das weitere Betriebsverfahren 100 zur Verfügung gestellt. Die Konfigurationsdaten 27 sind ebenfalls an die lokale Steuereinheit 20 übertragbar. Der zweite Schritt 120 kann im Wesentlichen gleichzeitig mit dem ersten Schritt 110 durchgeführt werden, oder zeitlich versetzt.

Ferner weist das Betriebsverfahren 100 einen dritten Schritt 130 auf, in dem die im zweiten Schritt 120 ermittelte Konfiguration 17, beispielsweise in Form der Konfigurationsdaten 27, an eine Künstliche Intelligenz 30 übermittelt wird. Dazu können die entsprechenden Daten 21 an die lokale Steuereinheit 20 gesendet werden. Gleichermaßen wird im dritten Schritt 130 der zumindest eine Prozessparameter 15, der im ersten Schritt 110 ermittelt wird, an die Künstliche Intelligenz 30 übermittelt. Hierzu können beispielsweise die Konfigurationsdaten 17 an die lokale Steuereinheit 20 gesendet werden. Die Künstliche Intelligenz 30 ist als Neuronales Netz 32 ausgebildet und gehört zu einem Computerprogrammprodukt 50, das zumindest teilweise, also als Teilprogramm, in der lokalen Steuereinheit 20 ausführbar gespeichert ist. Die Künstliche Intelligenz 30, und damit auch das Computerprogrammprodukt 50, ist dazu ausgebildet, Konfiguration 17 und den zumindest einen Prozessparameter 15 zu empfangen und zu verarbeiten. In einem vierten Schritt 140 wird durch die Künstliche Intelligenz 30 zumindest ein Fähigkeits-Parameter 33 ermittelt, der eine Fähigkeit der Werkzeugmaschine 10 abbildet. Der Fähigkeits-Parameter 33 wird durch die Künstliche Intelligenz 30 mit der vorliegenden zugehörigen Konfiguration 17 verknüpft. Der zumindest eine Fähigkeits-Parameter 33 kann beispielsweise einen erreichbaren Arbeitsraum des Werkzeugs 16, dessen Verschleiß, dessen Energiebedarf bzw. dessen Werkzeugantriebs 11 oder Verfahrantriebs 13, oder eine Angabe über einen durchgeführten Arbeitsphasen-Typ umfassen. Der Arbeitsphasen-Typ kann bei einem Fräser als Werkzeug 16 beispielsweise eine Angabe darüber sein, ob das im ersten Schritt 110 vorliegende Bearbeiten des Werkstücks 14 ein Grobzerspanen oder ein Überfräsen zum Verfeinern der Oberfläche des Werkstücks 14 ist. Ferner wird der zumindest eine im vierten Schritt 140 ermittelte Fähigkeits-Parameter 33 über die kommunikative Datenverbindung 36 für die übergeordnete Steuereinheit 40 bereitgestellt. Hierzu kann der zumindest eine ermittelte Fähigkeits-Parameter 33 von der lokalen Steuereinheit 20 an die übergeordnete Steuereinheit 40 in Form von Daten 21 gesendet werden.

Einzelne oder sämtliche Schritte 110, 120, 130, 140 des Betriebsverfahrens 100 können betriebsbegleitend zum Betrieb der Werkzeugmaschine 10 durchgeführt werden. Weiter können einzelne oder sämtliche Schritte 110, 120, 130, 140 des Betriebsverfahrens 100 wiederholt durchgeführt werden. Das skizzierte Betriebsverfahren 100 ist analog auf zumindest einer der weiteren Werkzeugmaschinen 10.1, 10.2, 10.3 des Fertigungssystems 70 durchführbar, so dass auch zumindest ein Fähigkeits-Parameter 33 über zumindest eine der weiteren Werkzeugmaschinen 10.1, 10.2, 10.3 vorliegt. Die übergeordnete Steuereinheit 40 ist weiter dazu ausgebildet, in einem fünften Schritt 150 einen Maschinenauftrag 35 zu empfangen, der eine durchzuführende Bearbeitung eines Werkstücks 14 beschreibt. Im fünften Schritt 150 wird ferner der Maschinenauftrag 35 durch die übergeordnete Steuereinheit 40 ausgewertet und daraus eine Fähigkeits-Anforderung für die Ausführung des Maschinenauftrags 35 ermittelt. Weiter wird im fünften Schritt 150 ermittelt, welche der Werkzeugmaschinen 10, 10.2, 10.2, 10.3 im Fertigungssystem 70 über einen Fähigkeits-Parameter 33 verfügt, der mit der ermittelten Fähigkeits-Anforderung korrespondiert. Es folgt ein sechster Schritt 160, in dem der Maschinenauftrag 35 durch zumindest eine der Werkzeugmaschinen 10, 10.1, 10.2, 10.3 durchgeführt wird, in der ein Fähigkeits-Parameter 33 vorliegt, der der ermittelten Fähigkeits-Anforderung genügt. Das Auswählen einer entsprechenden Werkzeugmaschine 10, 10.1, 10.2, 10.3 kann ebenso im sechsten Schritt 160 erfolgen. Die übergeordnete Steuereinheit 40 verfügt ferner über ein Simulationsprogrammprodukt 60, das als Digitaler Zwilling des Fertigungssystems 70 ausgebildet ist. Das Simulationsprogrammprodukt 60 ist dazu geeignet, die Durchführung eines Maschinenauftrags 35 auf den jeweiligen Werkzeugmaschinen 10, 10.1, 10.2, 10.3 zu simulieren und die Durchführung des Maschinenauftrags 35 in Hinblick auf eine vorgebbare Größe optimierbar.

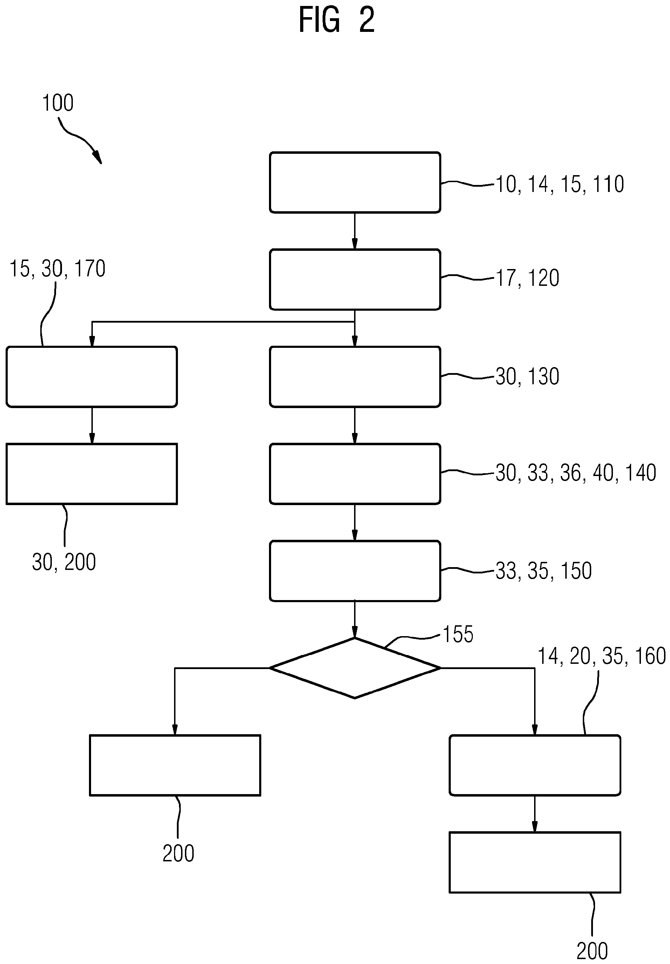

In FIG 2 ist eine zweite Ausführungsform des beanspruchten Betriebsverfahrens 100 schematisch dargestellt. Das Betriebsverfahren 100 geht von einem ersten Schritt 110 aus, in dem eine Werkzeugmaschine 10 in einem aktiven Betriebszustand bereitgestellt wird, in dem ein Werkstück 14 bearbeitet wird. Ebenso wird im ersten Schritt 110 zumindest ein Prozessparameter 15 erfasst. Es folgt ein zweite Schritt 120, in dem eine vorliegende Konfiguration 17 der Werkzeugmaschine 10 erfasst wird, die zumindest teilweise während des ersten Schritts 110 vorliegt. Auf den zweiten Schritt 120 folgt ein dritter Schritt 130, in dem der zumindest eine im ersten Schritt 110 erfasste Prozessparameter 15 und die im zweiten Schritt 120 erfasste Konfiguration 17 an eine Künstliche Intelligenz 30 übertragen werden. Es folgt ein vierter Schritt 140, in durch die Künstliche Intelligenz 30 anhand der im dritten Schritt 130 übertragenen Konfiguration 17 und des zumindest einen übertragenen Prozessparameters 15 zumindest ein Fähigkeits-Parameter 33 der Werkzeugmaschine 10 ermittelt wird. Der im vierten Schritt 140 zumindest eine ermittelte Fähigkeits-Parameter 33 wird einer übergeordneten Steuereinheit 40 bereitgestellt, also beispielsweise an diese übertragen. Die übergeordnete Steuereinheit 40 ist mit der zugehörigen Werkzeugmaschine 10 über eine kommunikative Datenverbindung 36 gekoppelt. Es schließt sich ein fünfter Schritt 150 an, in dem ein Maschinenauftrag 35 empfangen wird, der eine durchzuführende Bearbeitung eines Werkstücks 14 durch die Werkzeugmaschine 10 darstellt. Der Maschinenauftrag 35 wird im fünften Schritt 150 ausgewertet und eine Fähigkeits-Anforderung ermittelt, die notwendig ist, um dem Maschinenauftrag 35 durchzuführen. Die ermittelte Fähigkeits-Anforderung wird mit dem zumindest einen Fähigkeits-Parameter 33 der Werkzeugmaschine 10 verglichen und dabei ermittelt, ob der zumindest eine Fähigkeits-Parameter 33 der Fähigkeits-Anforderung genügt. In Abhängigkeit vom Ergebnis dieses Vergleichs ergibt sich für das beanspruchten Betriebsverfahren 100 eine Verzweigung 155. Wenn der zumindest eine Fähigkeits-Parameter 33 nicht der Fähigkeits-Anforderung genügt, erreicht das Betriebsverfahren 100 unmittelbar einen Endzustand 200. Der unmittelbare Endzustand 200 ist in FIG 2 links von der Verzweigung 155 dargestellt. Wird hingegen ermittelt, dass der zumindest eine Fähigkeits-Parameter 33 der Fähigkeits-Anforderung genügt, wird ein sechster Schritt 160 durchgeführt. Darin erfolgt ein Bearbeiten des Werkstücks 14 durch die Werkzeugmaschine 10 gemäß dem Maschinenauftrag 35, der im fünften Schritt 150 empfangen wird. Nach dem sechsten Schritt 160 erreicht das Betriebsverfahren 160 ebenfalls einen Endzustand 200.

Nach dem zweiten Schritt 120, im Wesentlichen gleichzeitig zum dritten Schritt 130, erfolgt ein siebter Schritt 170. Darin werden der zumindest eine Prozessparameter 15 aus dem ersten Schritt 110 und die Konfiguration 17 aus dem zweiten Schritt 120 gespeichert und als Trainingsdatensatz bereitgestellt. Mittels des Trainingsdatensatzes wird die Künstliche Intelligenz 30, die im vierten Schritt 140 eingesetzt wird, weitertrainiert. Eine entsprechend weitertrainierte, also selbsttätig weiterentwickelte, Instanz der Künstlichen Intelligenz 30 liegt darauf im Endzustand 200 vor. Die weitertrainierte Instanz der Künstlichen Intelligenz 30, die nach dem siebten Schritt 170 vorliegt, ist dazu geeignet, die Künstliche Intelligenz 30, die im vierten Schritt 140 eingesetzt wird, zu ersetzen.

## Patentansprüche

1. Betriebsverfahren (100) für eine Werkzeugmaschine (10), die mit einer Mehrzahl an Sensoren (12) zum Erfassen von vorliegenden Prozessparametern (15) und mit einer lokalen Steuereinheit (20) ausgestattet ist, umfassend die Schritte:
a) Bereitstellen der Werkzeugmaschine (10) in einem aktiven Betriebszustand, in dem ein Werkstück (14) bearbeitet wird und Erfassen von zumindest einem Prozessparameter (15) der Werkzeugmaschine (10) und/oder des Werkstücks (14) mittels zumindest einem der Sensoren (12);
b) Erfassen einer vorliegenden Konfiguration (17) der Werkzeugmaschine (10);
c) Übermitteln der im Schritt b) erfassten vorliegenden Konfiguration (17) der Werkzeugmaschine (10) und des in Schritt a) erfassten zumindest einen Prozessparameters (15) an eine Künstliche Intelligenz (30);
d) Ermitteln zumindest eines Fähigkeits-Parameters (33) anhand der Künstlichen Intelligenz (40), der mit der vorliegenden Konfiguration der Werkzeugmaschine (10) verknüpft ist;
wobei der zumindest eine Fähigkeits-Parameter (33) einer übergeordneten Steuereinheit (40) bereitgestellt wird, die mit der lokalen Steuereinheit (20) über eine Datenverbindung, insbesondere eine kommunikative Datenverbindung (36), verbunden ist.

2. Betriebsverfahren (100) nach Anspruch 1, **dadurch gekennzeichnet, dass** der zumindest eine Prozessparameter (15) als Koordinate einer Werkzeugposition (22) und/oder Werkzeugausrichtung der Werkzeugmaschine (10), als ein Sollwert für ein Antriebsdrehmoment (23), als Messdaten des Werkstücks (14), als Bilddaten (24) vom Werkstück (14), als manuelle Steuerungsdaten, als Leistungsaufnahme (25) des Werkzeugs (16), als Verschleißzustand des Werkzeugs (16) und/oder als Kombination hieraus ausgebildet ist.

3. Betriebsverfahren (100) nach Anspruch 1 oder 2, **dadurch gekennzeichnet, dass** die vorliegende Konfiguration (17) der Werkzeugmaschine (10) als Konfigurationsdaten (27) erfasst wird, wobei die Konfigurationsdaten (27) eine Typenangabe über das Werkzeug (16), eine Versionsangabe über ein Steuerungsprogramm (45) auf der lokalen Steuereinheit (20), und/oder eine Code-Analyse-Angabe zum Steuerungsprogramm (45) umfassen.

4. Betriebsverfahren (100) nach einem der Ansprüche 1 bis 3, **dadurch gekennzeichnet, dass** die Künstliche Intelligenz (30) als Machine-Learning-Algorithmus, insbesondere als Neuronales Netz (32), ausgebildet ist.

5. Betriebsverfahren (100) nach einem der Ansprüche 1 bis 4, **dadurch gekennzeichnet, dass** der Fähigkeits-Parameter (33), einen erreichbaren Arbeitsraum, einen Energieverbrauch, eine Verschleißrate, eine Angabe über einen Arbeitsphasen-Typ, eine Häufigkeitsangabe über eine Mehrzahl an Arbeitsphasen-Typen, eine Beschaffenheitsangabe des Werkstücks (14) und/oder eine Kombination hieraus umfasst.

6. Betriebsverfahren (100) nach einem der Ansprüche 1 bis 5, **dadurch gekennzeichnet, dass** die Künstliche Intelligenz (30) auf der lokalen Steuereinheit (20) oder der übergeordneten Steuereinheit (40) abläuft.

7. Betriebsverfahren (100) nach einem der Ansprüche 1 bis 5, **dadurch gekennzeichnet, dass** die Künstliche Intelligenz (30) teilweise auf der lokalen Steuereinheit (20) und teilweise auf der übergeordneten Steuereinheit (40) abläuft.

8. Betriebsverfahren (100) nach einem der Ansprüche 1 bis 7, **dadurch gekennzeichnet, dass** das Betriebsverfahren (100) einen weiteren Schritt e) umfasst, in dem ein Maschinenauftrag (35) empfangen wird und zumindest eine Fähigkeits-Anforderung ermittelt wird; und in einem weiteren Schritt f) der Maschinenauftrag (35) von der Werkzeugmaschine (10) umgesetzt wird, wenn für die zumindest eine Fähigkeits-Anforderung ein korrespondierender Fähigkeits-Parameter (33) der Werkzeugmaschine (10) ermittelt wird.

9. Betriebsverfahren (100) nach einem der Ansprüche 1 bis 8, **dadurch gekennzeichnet, dass** zumindest die Schritte a) und b) jeweils in einer Mehrzahl an Fertigungsdurchgängen, in denen jeweils ein Werkstück (14) bearbeitet wird, betriebsbegleitend durchgeführt werden.

10. Betriebsverfahren (100) nach Anspruch 9, **dadurch gekennzeichnet, dass** anhand des zumindest einen im Schritt a) ermittelten Prozessparameter (15) und der im Schritt b) ermittelten Konfiguration (17) der Werkzeugmaschine (10) die Künstliche Intelligenz (30) weitertrainiert wird.

11. Computerprogrammprodukt (50) zum Ermitteln eines Fähigkeits-Parameters (33) einer Werkzeugmaschine (10), das zum Empfangen und Verarbeiten zumindest eines Prozessparameters (15) und einer Konfiguration (17) der Werkzeugmaschine (10) ausgebildet ist, wobei das Computerprogrammprodukt (50) eine Künstliche Intelligenz (30) umfasst, **dadurch gekennzeichnet, dass** das Computerprogrammprodukt (50) zum Durchführen eines Betriebsverfahrens (100) nach einem der Ansprüche 1 bis 10 ausgebildet ist.

12. Übergeordnete Steuereinheit (40), die mit einer Mehrzahl an Werkzeugmaschinen (10, 10.1, 10.2, 10.3) über eine Datenverbindung, insbesondere eine kommunikative Datenverbindung (36), koppelbar ist, die jeweils mit einer lokalen Steuereinheit (20) versehen sind, **dadurch gekennzeichnet, dass** die übergeordnete Steuereinheit (40) dazu ausgebildet ist, ein Betriebsverfahren (100) nach einem der Ansprüche 1 bis 10 zumindest teilweise durchzuführen.

13. Werkzeugmaschine (10) mit einer lokalen Steuereinheit (20) und einem Werkzeug (16) zum Bearbeiten eines Werkstücks (14), die mit einer Mehrzahl an Sensoren (12) zu einem Erfassen von zumindest einem Prozessparameter (15) beim Bearbeiten des Werkstücks (14) ausgestattet ist, **dadurch gekennzeichnet, dass** die lokale Steuereinheit (20) dazu ausgebildet ist, ein Betriebsverfahren (100) nach einem der Ansprüche 1 bis 10 zumindest teilweise durchzuführen.

14. Fertigungssystem (70), umfassend eine Mehrzahl an Werkzeugmaschinen (10, 10.1, 10.2, 10.3), die mit einer übergeordneten Steuereinheit (40) mittelbar oder unmittelbar verbunden sind, **dadurch gekennzeichnet, dass** das Fertigungssystem (70) dazu ausgebildet ist, ein Betriebsverfahren (100) nach einem der Ansprüche 1 bis 10 für eine Mehrzahl seiner Werkzeugmaschinen (10, 10.1, 10.2, 10.3) durchzuführen.

15. Simulationsprogrammprodukt (60) zum Optimieren eines Fertigungsvorgangs, der auf einem Fertigungssystem (70) durchzuführen ist, wobei das Simulationsprogrammprodukt (60) einen Digitalen Zwilling des Fertigungssystems (70) umfasst, **dadurch gekennzeichnet, dass** das Fertigungssystem (70) nach Anspruch 14 ausgebildet ist.

16. Verwendung einer Künstlichen Intelligenz (30), die zum Empfangen und Verarbeiten zumindest eines vorliegenden Prozessparameters (15) und einer vorliegenden Konfiguration (17) einer Werkzeugmaschine (10) ausgebildet ist, **dadurch gekennzeichnet, dass** die Künstliche Intelligenz (30) zu einem Ermitteln eines Fähigkeits-Parameters (33) der Werkzeugmaschine (10) eingesetzt wird.
